# EUROPEAN PATENT SPECIFICATION

(11) **EP 3 106 975 B1**
(45) Date of publication and mention of the grant of the patent: **11.11.2020**
(21) Application number: 15172022.4
(22) Date of filing: 15.06.2015
(51) Int. Cl.: G06F 3/12, G06K 15/02

(54) **IMAGE FORMING APPARATUS**
BILDERZEUGUNGSVORRICHTUNG
APPAREIL DE FORMATION D'IMAGE

(43) Date of publication of application: 21.12.2016
(73) Proprietor: Kabushiki Kaisha Toshiba, Tokyo 105-8001 (JP); Toshiba TEC Kabushiki Kaisha, Tokyo 141-0032 (JP)
(72) Inventor: IDE, Fumito, Shinagawa-ku, Tokyo 141-0032 (JP)
(74) Representative: Bandpay & Greuter

(56) References cited:
- US-A1- 2006 072 148

## Description

### FIELD

Embodiments described herein relate generally to an image forming apparatus.

### BACKGROUND

An image forming apparatus such as an MFP (MultiFunctional Peripheral) has functions including a copy function, a scan function and the like.

In general, an image forming apparatus is shared by several users. Thus, if the image data to be handled becomes a high-capacity data, there is a possibility that it takes time to perform processing and the waiting time of users becomes long.

Document US 2006/072148 discloses a process for load sharing among networked image processing device. An overloaded device sends a request to peer devices, calling for a response from peer devices that are idle and in a situation to be able to assist in providing image processing services for the rendering job. This process implies a necessary back and forth questioning between peer devices, with additional time necessary to assess and send back, on demand, the CPU availability of each device.

An aim of the present invention is a more efficient sharing process and system.

### BRIEF DESCRIPTION OF THE DRAWINGS

Fig. 1 is an external view illustrating an example of an image forming apparatus 100 according to an embodiment;
Fig. 2 is a diagram illustrating an example of the constitution of an image forming system 50 according to the embodiment;
Fig. 3 is a diagram illustrating an example of the constitution of an MFP 100 according to the embodiment;
Fig. 4 is a diagram illustrating an example of crude data T1 stored by a storage section 20a;
Fig. 5 is a diagram illustrating an example of a state management information T2 stored by the storage section 20a;
Fig. 6 is a diagram illustrating an example of processed data T3 stored by the storage section 20a;
Fig. 7 is a first diagram illustrating an example of a processing flow of an image forming system 50 according to the embodiment;

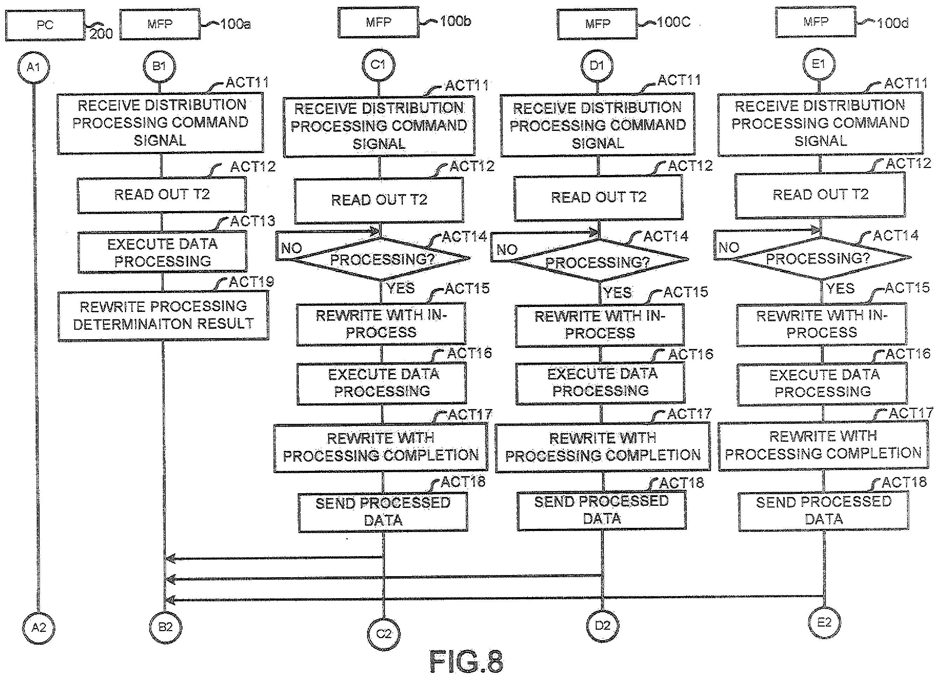

Fig. 8 is a second diagram illustrating an example of a processing flow of the image forming system 50 according to the embodiment; and
Fig. 9 is a third diagram illustrating an example of a processing flow of the image forming system 50 according to the embodiment.

### DETAILED DESCRIPTION

In accordance with an embodiment, there is provided an image forming system as defined in any one of claims 1 to 3.

Hereinafter, the image forming apparatus 100 according to the embodiment is described with reference to the accompanying drawings.

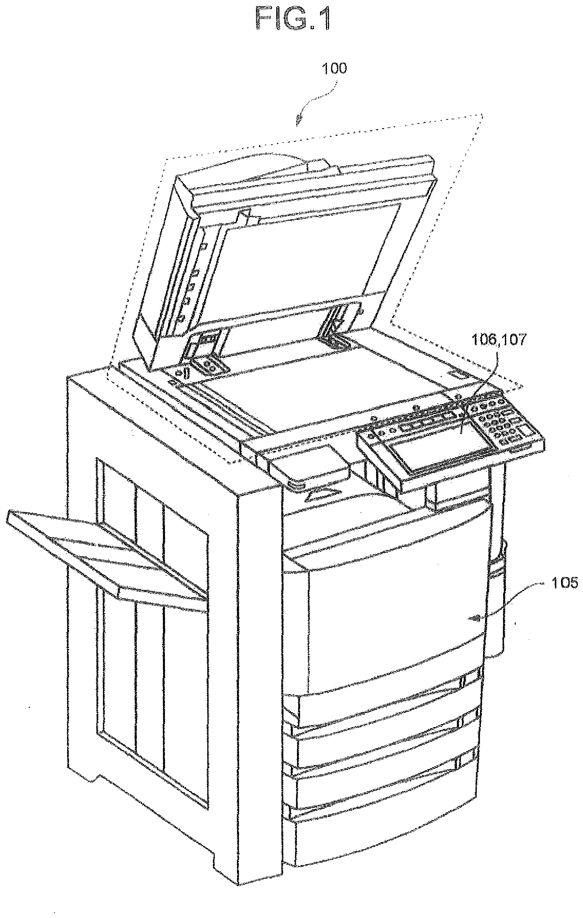

Fig. 1 is an external view illustrating an example of the image forming apparatus 100 according to the embodiment. For example, the image forming apparatus 100 is an MFP. The image forming apparatus 100 reads an image to generate image data (digital data). The image forming apparatus 100 prints the image data sent through a network.

The image forming apparatus 100 comprises a printing section 105, an operation panel 106, and a reading section 107. The image forming apparatus 100 is not limited to one which fixes the toner image, and may be an inkjet type image forming apparatus.

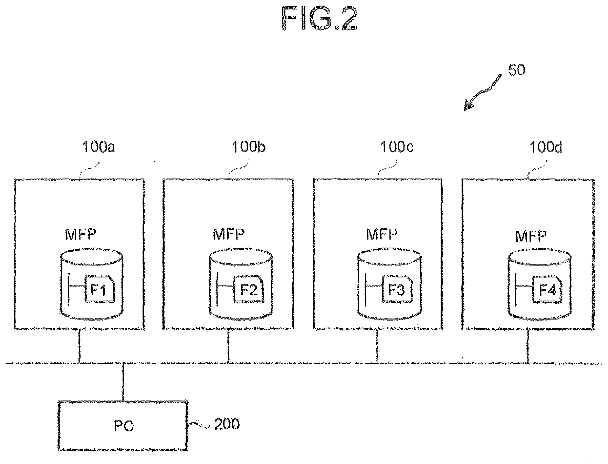

Fig. 2 is a diagram illustrating an example of the constitution of an image forming system 50 according to the embodiment. The image forming system 50 of the embodiment comprises four MFPs 100 (100a, 100b, 100c and 100d) and a personal computer 200. Hereinafter, the personal computer 200 is referred to as a PC 200.

The user carries out an input operation for printing an image A stored in the PC 200 with the MFP 100a on the PC 200.

The PC 200 sends a spool data and information indicating processing content corresponding to the spool data to the MFP 100a. For example, the processing content is a printing of image data, an optical character reader and the like.

The MFP 100a receives the spool data and the information indicating processing content from the PC 200. The MFP 100a divides the received spool data based on the received information indicating processing content. For example, in a case in which the received information indicating processing content is information of four-page printing, the MFP 100a divides the received spool data into four-page data from first page to fourth page such that the processing is evenly distributed to the MFPs including the MFP 100a. The MFP 100a writes the divided data into a given data area of the storage section respectively. Further, the MFP 100a writes an address where the divided data is written and an address where the processed data is to be written into the given data area of the storage section. The MFP 100a further writes the information indicating the processing content corresponding to the divided data into the given data area of the storage section. The MFP 100a determines whether or not a processing is carried out for each divided data based on a data processing state of the self-device. The MFP 100a writes whether to process the data by the self-device or to process the data by other device for each divided data in the given data area of the storage section.

Each of the MFPs 100b, 100c and 100d accesses the given data area of the storage section. Each of the MFPs 100b, 100c and 100d determines whether to process the divided data, which is determined by the MFP 100a to be processed by other device, by self-device. If determined to process by self-device, each of the MFPs 100b, 100c and 100d writes information indicating that the self-device carries out data processing in the given data area of the storage section. The MFP that is determined to process data by self-device among the MFPs 100b, 100c and 100d executes a data processing. Then, the MFP which executes the data processing sends the data after the data processing to the MFP 100a.

The MFP 100a receives the data after the data processing, and summarizes the image data into one to carry out printing. Alternatively, the MFP 100a summarizes the data after the optical character recognition processing into one file and generates the one file.

In this way, the processing instructed to the MFP 100a by the PC 200 is distributed to the MFPs 100b, 100c and 100d. As a result, it is possible to improve the processing speed and shorten the processing time.

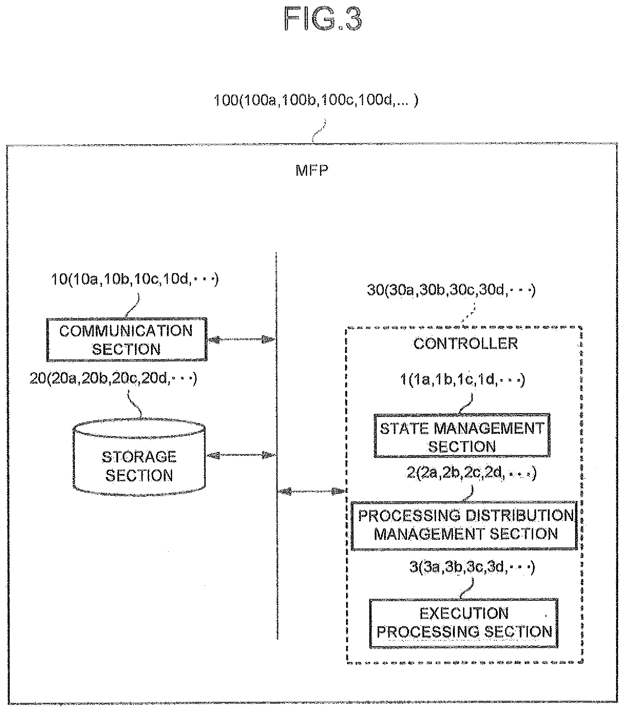

Fig. 3 is a diagram illustrating an example of the constitution of the MFP 100a according to the embodiment.

The MFP 100a comprises a communication section 10a, a storage section 20a and a controller 30a.

The communication section 10a carries out communication with the PC 200.

The storage section 20a stores various kinds of information required in the processing carried out by the MFP 100a. For example, the storage section 20a stores a dedicated application program for carrying out a desired control by the controller 30a.

The controller 30a includes a state management section 1a, a processing distribution management section 2a and an execution processing section 3a.

The state management section 1a manages the state of the MFP 100a. For example, the state of the MFP 100a includes an absence/presence of error, an absence/presence of processing during execution, an absence/presence of spool data and the like.

The processing distribution management section 2a determines whether or not to execute a processing indicated by state management information based on the state management information and the state of the MFP 100a. Further, the state management information T2 is described later in detail.

The execution processing section 3a carries out various processing in the self-device.

Further, each of the MFPs 100b, 100c, 100d... has the same constitution as the MFP 100a. By replacing the symbol a with b, c, d... in the description of the MFP 100a stated above, the same description is also applicable to the MFPs 100b, 100c, 100d and the like.

The MFPs 100a, 100b, 100c, 100d ... are collectively referred to as the MFP 100. The communication sections 10a, 10b, 10c, 10d... are collectively referred to as the communication section 10. The storage sections 20a, 20b, 20c, 20d... are collectively referred to as the storage section 20. The controllers 30a, 30b, 30c, 30d... are collectively referred to as the controller 30. The state management sections 1a, 1b, 1c, 1d... are collectively referred to as the state management section 1. The processing distribution management sections 2a, 2b, 2c, 2d... are collectively referred to as the processing distribution management section 2. The execution processing sections 3a, 3b, 3c, 3d... are collectively referred to as the execution processing section 3.

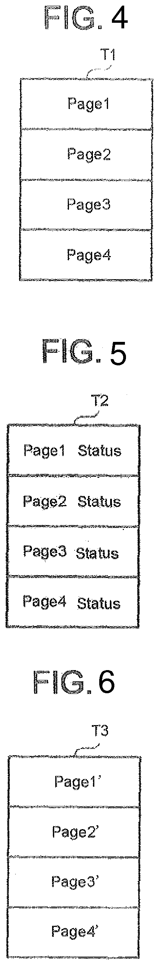

Fig. 4 is a diagram illustrating an example of a crude data T1 that is stored in the storage section 20 according to the embodiment. The storage section 20 stores the crude data T1 in each given unit. For example, the crude data T1 is a spool data of image. In a case of printing an image through the MFP 100, the storage section 20 stores the spool data in each page as shown in Fig. 4. For example, the crude data T1 is the spool data of image including characters. In a case of reading the characters through an OCR technology, the storage section 20 stores the spool data for each image.

Fig. 5 is a diagram illustrating an example of state management information T2 stored by the storage section 20 according to the embodiment. The storage section 20 stores the state management information T2 in the crude data T1 in each given unit. The state management information T2 includes information of controller for processing, information of processing condition, and address information of spool data in each given unit of the spool data. Further, the state management information T2 includes information of written address of the processed data and information of processing content in each given unit of the spool data. The information of controller for processing is information indicating the data of each given unit of the spool data is to be processed by a controller of which MFP. The information of processing condition is information indicating whether the controller for processing is in a state before data processing, in data processing or data processing completion. The address information of spool data is information indicating an address of the data area in the storage section 20 in which the spool data is stored. The information of written address of the processed data is information indicating an address of the data area in which the processed data processed by the controller for processing is written. The information of processing content is information indicating which processing is carried out for the spool data.

Fig. 6 is a diagram illustrating an example of processed data T3 stored by the storage section 20 according to the embodiment. The storage section 20 stores the processed data T3 in each given unit. For example, the processed data T3 is generated by carrying out a processing indicating the information of processing content through the controller for processing in each given unit of the spool data. For example, the crude data T1 is the spool data of an image from page one to page four. In a case in which the processing indicating the information of processing content is a printing processing, the storage section 20 stores image data in each page. For example, as shown in Fig. 6, the storage section 20 stores image data from page 1' to page 4' corresponding to each of the spool data of image from page one to page four in each page.

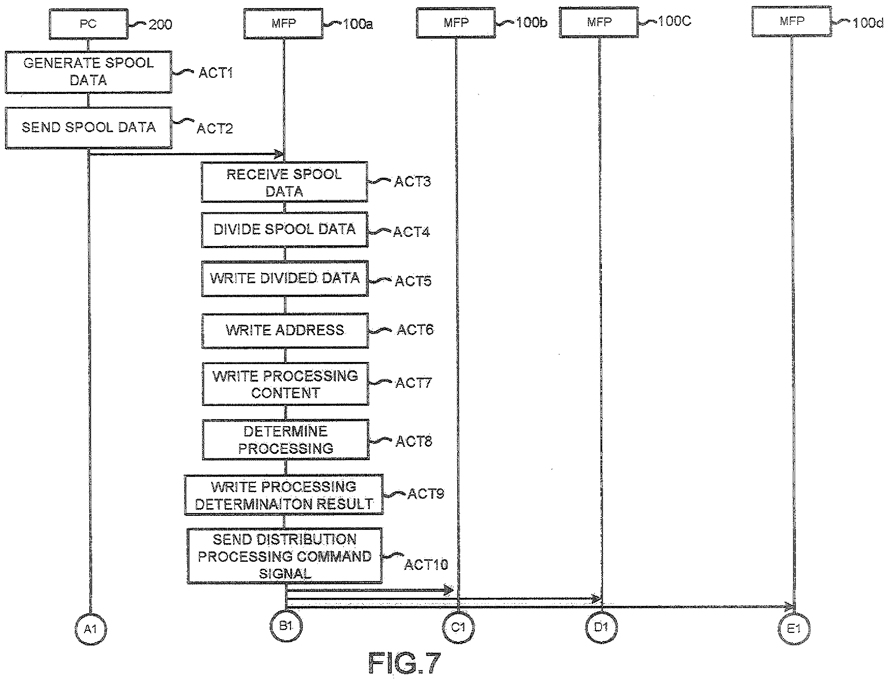

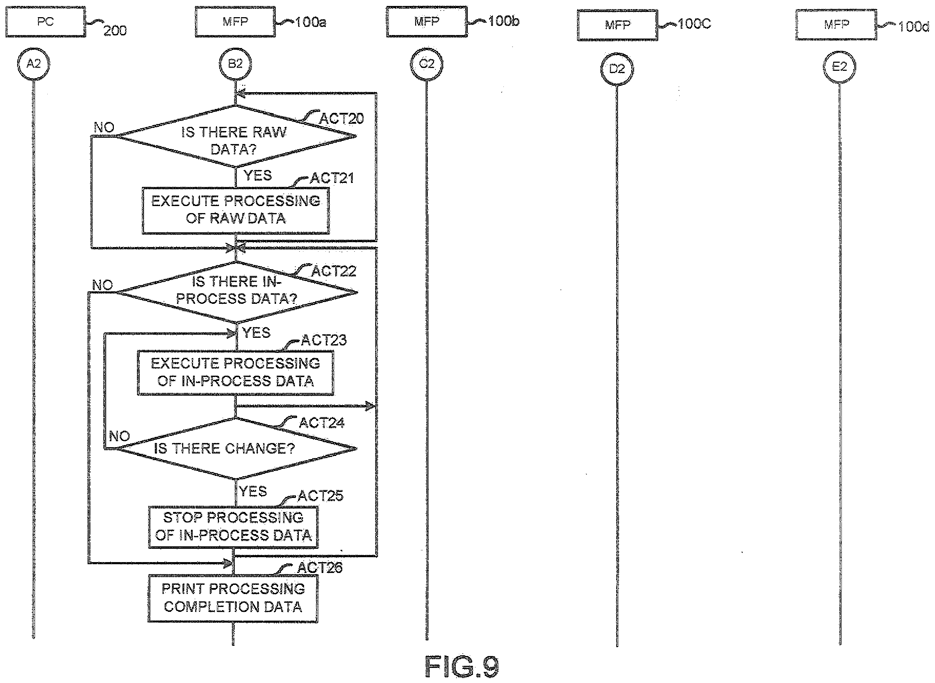

Fig. 7∼Fig. 9 are diagrams illustrating an example of a processing flow of the image forming system 50 according to the embodiment. The processing of the image forming system 50 according to the embodiment is described with reference to Fig. 7∼Fig. 9. Further, dedicated application programs are pre-installed in the MFP 100 (100a, 100b, 100c and 100d) in the image forming system 50. Dedicated application programs are pre-installed in the PC 200 in the image forming system 50. It is assumed that the dedicated application programs are executed in each device of the MFP 100 and the PC 200.

The user carries out an input operation for printing an image A stored by the PC 200 with the MFP 100a on the PC 200.

The PC 200 generates a spool data of the image A according to the input operation of the user (ACT 1). The spool data of the image A is a data (image data) generated for a printer driver of the PC 200 to enable the MFP 100a to print the image A. For example, the format of the spool data is a postscript data. The PC 200 sends the generated spool data and the information indicating the processing content corresponding to the spool data to the MFP 100a (ACT 2).

The execution processing section 3a of the MFP 100a receives the information indicating the processing content and the spool data through the communication section 10a from the PC 200 (ACT 3).

The execution processing section 3a divides the received spool data based on the received information indicating the processing content (ACT 4). For example, in a case in which the received information indicating the processing content is information indicating a printing, the execution processing section 3a divides the received spool data into four-page data from first page to fourth page.

The execution processing section 3a writes the divided data into a given data area of the storage section 20 respectively (ACT 5). For example, the execution processing section 3a writes the divided data from the first page to the fourth page into a crude data T1 of a data area F1 of the storage section 20a.

The execution processing section 3a writes an address where the divided data is written and an address where the processed data is to be written into the given data area of the storage section 20 (ACT 6). For example, the execution processing section 3a writes the address where the divided data is written and the address where the processed data is to be written into the state management information T2 of a data area F1.

Further, the execution processing section 3a writes the information indicating processing content corresponding to the divided data into the given data area of the storage section 20a (ACT 7). For example, the execution processing section 3a writes the information indicating processing content corresponding to the divided data into the state management information T2 of the data area F1.

The processing distribution management section 2a determines whether or not the execution processing section 3a carries out a processing for each divided data (ACT 8). For example, the processing distribution management section 2a calls the state management information T2 from the storage section 20a. The processing distribution management section 2a acquires a state of the MFP 100a from the state management section 1a. The processing distribution management section 2a determines whether to execute a processing indicated by the state management information T2 based on the state management information T2 and the state of the MFP 100a. Then, for example, the processing distribution management section 2a determines that the execution processing section 3a carries out a processing of data of first page among the four-page data from first page to fourth page. Further, the processing distribution management section 2a determines that other device carries out a processing of the remained three-page data from second page to fourth page.

The processing distribution management section 2a writes information indicating a processing determination result into the given data area of the storage section 20a (ACT 9). For example, the processing distribution management section 2a writes the data of first page and the information indicating that the execution processing section 3a carries out a processing (data processing status) in an associated manner into the state management information T2 of the data area F1. Further, for example, the processing distribution management section 2a writes the data of second page, information indicating that the other device carries out a processing and information indicating a processing that has not been carried out yet in an associated manner into the state management information T2. Further, for example, the processing distribution management section 2a writes the data of third page, information indicating that the other device carries out a processing and information indicating a processing that has not been carried out yet in an associated manner into the state management information T2. Further, for example, the processing distribution management section 2a writes the data of fourth page, information indicating that the other device carries out a processing and information indicating a processing that has not been carried out yet in an associated manner into the state management information T2.

The processing distribution management section 2a sends a distribution processing command signal to each of the execution processing sections 3 of the MFP 100 (ACT 10). The distribution processing command signal is a signal for enabling the execution processing section 3 to refer to the information indicating the processing determination result.

When receiving the distribution processing command signal (ACT 11), each of the execution processing sections 3 reads out the state management information T2 from the storage section 20a (ACT 12). For example, when receiving the distribution processing command signal, each of the execution processing sections 3 reads out the state management information T2 including the address, the processing content and the information of the processing determination result. Further, the address refers to an address where the divided data is written and an address where the processed data is to be written.

The execution processing section 3a carries out a data processing based on the read state management information T2 (ACT 13). For example, in a case in which the processing determination result of the state management information T2 indicates the processing of the MFP 100a, the execution processing section 3a executes a processing indicated by the processing content for the corresponding crude data.

Further, each of the execution processing sections 3 other than the execution processing section 3a outputs the read state management information T2 to the processing distribution management section 2 of the self-device.

Each of the processing distribution management sections 2 other than the processing distribution management section 2a inputs the state management information T2 from the execution processing sections 3 of the self-device. It is assumed that the processing determination result of the state management information T2 indicates a processing of the MFP 100 other than the MFP 100a. In this case, each of the processing distribution management sections 2 other than the processing distribution management section 2a determines whether to execute a data processing indicated by the processing content for the corresponding crude data (ACT 14). For example, each of the processing distribution management sections 2 other than the processing distribution management section 2a calls the state management information T2 from the storage section 20a. Each of the processing distribution management sections 2 other than the processing distribution management section 2a acquires a state of the self-device from the state management section 1 of the self-device. Each of the processing distribution management sections 2 other than the processing distribution management section 2a determines whether to execute a data processing based on the processing content of the state management information T2 and the state of the self-device.

It is assumed that each of the processing distribution management sections 2 other than the processing distribution management section 2a determines not to execute the processing indicated by the processing content (NO in ACT 14). In this case, each of the processing distribution management sections 2 other than the processing distribution management section 2a carries out the processing in ACT 14 after a given time elapses.

It is assumed that each of the processing distribution management sections 2 other than the processing distribution management section 2a determines to execute the processing indicated by the processing content (YES in ACT 14). In this case, each of the processing distribution management sections 2 other than the processing distribution management section 2a rewrites the processing determination result of the corresponding crude data with a content indicating that the self-device is carrying out the data processing (ACT 15). Each of the processing distribution management sections 2 other than the processing distribution management section 2a outputs a data processing instruction signal. The data processing instruction signal is a signal for instructing the execution processing section 3 of the self-device to execute a data processing for the crude data to be used in the data processing.

Each of the execution processing sections 3 other than the execution processing section 3a inputs the data processing instruction signal from the processing distribution management sections 2 of the self-device. Each of the execution processing sections 3 other than the execution processing section 3a executes a data processing for the crude data (ACT 16). Further, processing timings of the execution processing sections 3 are preset to different timings. For example, each of the execution processing sections 3 is preset in such a manner that a data processing is carried out after a time corresponding to the random numbers generated when receiving the distribution processing command signal elapses. Further, for example, a given time different from each other is preset for each of the execution processing sections 3, and each of the execution processing sections 3 executes a data processing if the preset given time elapses after the distribution processing command signal is received.

Each of the execution processing sections 3 other than the execution processing section 3a completes the data processing. Each of the execution processing sections 3 other than the execution processing section 3a outputs a processing completion signal indicating that the processing is completed to the processing distribution management sections 2 of the self-device.

Each of the processing distribution management sections 2 other than the processing distribution management section 2a inputs the processing completion signal from the execution processing section 3 of the self-device. Each of the processing distribution management sections 2 other than the processing distribution management section 2a rewrites the processing determination result of the state management information T2 with a content of data processing completion according to the processing completion signal (ACT 17). Each of the processing distribution management sections 2 other than the processing distribution management section 2a outputs a data processing completion signal indicating that the processing determination result is rewritten with the content of data processing completion to the execution processing section 3 of the self-device.

Each of the execution processing sections 3 other than the execution processing section 3a inputs the data processing completion signal from the processing distribution management section 2 of the self-device. Each of the execution processing sections 3 other than the execution processing section 3a sends the processed data to the MFP 100a according to the data processing completion signal (ACT 18).

The execution processing section 3a completes the processing in ACT 13. The execution processing section 3a outputs a processing completion signal indicating that the processing is completed to the processing distribution management section 2a.

The processing distribution management section 2a inputs the processing completion signal from the execution processing section 3a. The processing distribution management section 2a rewrites the processing determination result of the state management information T2 with a content of data processing completion according to the processing completion signal (ACT 19).

The processing distribution management section 2a determines whether or not there is a processing determination result indicating unprocessed in the state management information T2 (ACT 20).

It is assumed that the processing distribution management section 2a determines that there is a processing determination result indicating unprocessed (YES in ACT 20). In this case, similar to the processing in ACT 8, the processing distribution management section 2a determines whether or not the execution processing section 3a carries out a processing for the raw data, and the processing distribution management section 2a further writes information indicating the processing determination result into the given data area of the storage section 20a (equivalent to ACT 9). Then, the processing distribution management section 2a sends a distribution processing command signal to the execution processing sections 3 of the MFP 100 which will carries out a processing (equivalent to ACT 10). In this way, in a case in which there is a determination result indicating unprocessed, the execution processing section 3a carries out a determination on distribution processing again, and sends a distribution instruction to the MFPs 100b∼100d if it is possible to carry out a distribution processing. By repeating the operations stated above, the execution processing section 3a executes a processing of raw data (ACT 21). Then, the execution processing section 3a returns to carry out the processing in ACT 20.

On the other hand, it is assumed that the processing distribution management section 2a determines that there isn't a processing determination result indicating unprocessed (NO in ACT 20). In this case, the processing distribution management section 2a determines whether or not there is a processing determination result indicating in-process of other device in the state management information T2 (ACT 22).

It is assumed that the processing distribution management section 2a determines that there is a processing determination result indicating in-process of the other device (YES in ACT 22). In this case, the processing distribution management section 2a outputs an in-process data processing instruction signal to the execution processing section 3a. The in-process data processing instruction signal refers to a signal for instructing to execute a data processing in-process of the other device. The execution processing section 3a inputs the in-process data processing instruction signal from the processing distribution management section 2a. The execution processing section 3a executes a processing of the in-process data according to the in-process data processing instruction signal (ACT 23). The execution processing section 3a determines whether or not a processing determination result is changed from in-process of the other device to processing completion in the state management information T2 at given time intervals (ACT 24). It is assumed that the execution processing section 3a determines that it is changed to the processing determination result indicating processing completion (YES in ACT 24). In this case, the execution processing section 3a stops the data processing being carried out by the other device (ACT 25). The execution processing section 3a returns to carry out the processing in ACT 22 again. On the other hand, it is assumed that the execution processing section 3a determines that it has not been changed to the processing determination result indicating processing completion (NO in ACT 24). In this case, the execution processing section 3a returns to carry out the processing in ACT 23 to carry out a data processing in-process of the other device.

On the other hand, it is assumed that the processing distribution management section 2a determines that there isn't a processing determination result indicating in-process of the other device (NO in ACT 22). In this case, the processing distribution management section 2a executes a printing of the processing completion data (ACT 26).

Further, in a case in which the processing in the processing in ACT 23 is completed, the execution processing section 3a writes the processing completion data in a data area different from the given data area of the storage section 20a described above.

Further, the user may operate the operation panel 106 before the printing to change a printing setting of the image forming apparatus 100 such as a setting of size of printing paper, a black-white/color printing and the like.

The processing carried out by the image forming system 50 is described above.

Herein, the printing processing is described, and in a case in which the processing content is the optical character recognition, the data processing execution in ACT 16 is the character recognition, and the printing execution in ACT 26 refers to generate the data after the character recognition (Page) into one file.

In this way, each of the image forming apparatuses 100 can distribute the data processing instructed from the PC 200 to the image forming apparatus 100a. As a result, the processing time of data can be shortened.

Further, the use may carry out an instruction of data processing from the PC to the image forming apparatus 100 through a portable terminal (not shown) comprising an input section, an output section and a communication section.

Further, the storage section 20 of the present embodiment may be arranged at any position in a range in which the transmission/reception of suitable information can be carried out. Further, a plurality of the storage sections 20 may be arranged in the range in which the transmission/reception of suitable information can be carried out to distribute and store data.

Further, as to the processing flow of the present embodiment, the orders of the processing may be exchanged in a range in which suitable processing is carried out.

In accordance with the image forming apparatus 100 according to at least one embodiment stated above, the processing time of data can be shortened.

Though the embodiment is described, the image forming apparatus 100 and the PC 200 in the image forming system 50 described above may be equipped with a computer system inside thereof respectively. The process of the processing described above may be stored in a form of program in a computer-readable storage medium. By reading and executing the program by the computer, the processing described above is carried out. Herein, the computer-readable storage medium refers to a magnetic disc, a magnetic optical disc a CD-ROM, a DVD-ROM, a semiconductor memory and the like. Further, the computer program may be distributed to the computer via a communication line such that the computer executes the program.

Further, the aforementioned program may be used to realize a part of the functions described above. Furthermore, the program that can be used to realize the aforementioned functions through a combination with a program that has already been recorded in the computer system may be a so-called difference file (difference program).

While certain embodiments have been described, these embodiments have been presented by way of example only, and are not intended to limit the scope of the invention. Indeed, the novel embodiments described herein may be embodied in a variety of other forms within the scope of the accompanying claims.

## Claims

1. An image forming system (50) comprising a terminal apparatus (200) and a plurality of image forming apparatuses (100a, 100b, 100c, 100d), each of the plurality of image forming apparatuses (100a) comprising:
a storage section (20a, 20b, 20c, 20d) configured to store divided spool data and, for each divided data, information indicating processing content;
a state management section (1a, 1b, 1c, 1d) configured to specify a data processing state of self-device;
a processing distribution management section (2a, 2b, 2c, 2d); and
an execution processing section (3a, 3b, 3c, 3d),
wherein:
the processing distribution management section (2a, 2b, 2c, 2d) of a given image forming apparatus is configured to determine, for each of the divided data stored in the storage section of the given image forming apparatus, whether the given image forming apparatus is to execute the respectively stored processing content, based on the data processing state specified by the state management section of the given image forming apparatus;
the image forming system (50) being **characterized in that**:
the processing distribution management section (2a, 2b, 2c, 2d) of the given image forming apparatus is further configured, for each of the divided data stored in the storage section of the given image forming apparatus, if it is determined that the given image forming apparatus is to execute the respectively stored processing content, to write, within the information stored in the storage section of the given image forming apparatus, a data processing status corresponding to the respectively stored processing content with a content representing that the given image forming apparatus is to execute the respectively stored processing content, and if it is determined that the given image forming apparatus is not to execute the respectively stored processing content, to write the data processing status corresponding to the respectively stored processing content with a content representing that a different one of the image forming apparatuses is to execute the respectively stored processing content and to, after completion of the writing of the data processing status of each of the divided data, send a distribution processing command signal to each other of the plurality of image forming apparatuses, the distribution processing command signal being for enabling an image forming apparatus receiving it to refer to the information stored in the storage section of the given image forming apparatus;
the processing distribution management section (2a, 2b, 2c, 2d) of the given image forming apparatus is further configured to determine, for each of the divided data stored in the storage section of any other of the plurality of image forming apparatuses having sent the distribution processing command signal to the given image forming apparatus and for which the data processing status represents that a different image forming apparatus from that storing the divided data is to execute the respectively stored processing content, whether the given image forming apparatus is to execute the respectively stored processing content, based on the data processing state specified by the state management section of the given image forming apparatus, and to rewrite the data processing status corresponding to the respectively stored processing content with a content representing that the given image forming apparatus is to execute the respectively stored processing content if it is determined that the given image forming apparatus is to execute the respectively stored processing content;
the execution processing section of the given image forming apparatus is configured to execute, in a case in which the data processing status corresponding to a processing content stored in the storage section of any image forming apparatus indicates that the given image forming apparatus is to execute the processing content, a data processing indicated by the processing content on the divided data corresponding the processing content,
the processing distribution management section (2a, 2b, 2c, 2d) of the given image forming apparatus is further configured to, for each of the divided data stored in the storage section of the given image forming apparatus, determine whether or not there is a divided data for which the corresponding data processing status is unprocessed in a case in which the execution processing section of the given image forming apparatus completes the data processing that is to be executed by the given image forming apparatus, and to determine, for each of the determined divided data for which the corresponding data processing status is unprocessed, whether the given image forming apparatus is to execute the respectively stored processing content, based on the data processing state specified by the state management section of the given image forming apparatus,
the processing distribution management section (2a, 2b, 2c, 2d) of the given image forming apparatus is further configured, for each of the determined divided data for which the corresponding data processing status is unprocessed, if it is determined that the given image forming apparatus is to execute the respectively stored processing content, to rewrite the data processing status corresponding to the respectively stored processing content with a content representing that the given image forming apparatus is to execute the respectively stored processing content, and if it is determined that the given image forming apparatus is not to execute the respectively stored processing content, to send the distribution processing command signal to each other of the plurality of image forming apparatuses.

2. The image forming system according to claim 1, wherein
the processing distribution management section is further configured to determine whether or not there is a data indicating that the data processing status is in-process of other image forming apparatus in a case in which it is determined that there is no data indicating unprocessed.

3. The image forming system according to claim 1 or 2, wherein
the terminal apparatus comprises a sending section for sending the divided spool data and the information to one of the plurality of image forming apparatuses; and
each of the plurality of image forming apparatuses comprises a communication section (10a, 10b, 10c, 10d) configured to receive the divided spool data and the information from the terminal apparatus and carry out data transmission/reception with each of the plurality of image forming apparatuses.

## Patentansprüche

1. Bilderzeugungssystem (50), umfassend eine Endgerätevorrichtung (200) und eine Mehrzahl von Bilderzeugungsvorrichtungen (100a, 100b, 100c, 100d), wobei jede der Mehrzahl von Bilderzeugungsvorrichtungen (100a) umfasst:
einen Speicherabschnitt (20a, 20b, 20c, 20d), der so konfiguriert ist, dass er geteilte Spool-Daten und für die geteilten Daten jeweils Informationen speichert, die Verarbeitungsinhalt anzeigen;
einen Zustandsverwaltungsabschnitt (1a, 1b, 1c, 1d), der zum Spezifizieren eines Datenverarbeitungszustands der Vorrichtung selbst konfiguriert ist;
einen Verarbeitungsverteilungsverwaltungsabschnitt (2a, 2b, 2c, 2d); und
einen Ausführungsverarbeitungsabschnitt (3a, 3b, 3c, 3d),
wobei:
der Verarbeitungsverteilungsverwaltungsabschnitt (2a, 2b, 2c, 2d) einer gegebenen Bilderzeugungsvorrichtung so konfiguriert ist, dass er für die geteilten Daten, die im Speicherabschnitt der gegebenen Bilderzeugungsvorrichtung gespeichert sind, jeweils basierend auf dem Datenverarbeitungszustand, der vom Zustandsverwaltungsabschnitt der gegebenen Bilderzeugungsvorrichtung spezifiziert wird, bestimmt, ob die gegebene Bilderzeugungsvorrichtung den jeweils gespeicherten Verarbeitungsinhalt ausführen soll;
wobei die Bilderzeugungsvorrichtung (50) **dadurch gekennzeichnet ist, dass**:
der Verarbeitungsverteilungsverwaltungsabschnitt (2a, 2b, 2c, 2d) der gegebenen Bilderzeugungsvorrichtung ferner so konfiguriert ist, dass er innerhalb der im Speicherabschnitt der gegebenen Bilderzeugungsvorrichtung gespeicherten Informationen für alle geteilten Daten, die im Speicherabschnitt der gegebenen Bilderzeugungsvorrichtung gespeichert sind, einen Datenverarbeitungsstatus, der dem jeweils gespeicherten Verarbeitungsinhalt entspricht, mit meinem Inhalt schreibt, der darstellt, dass die gegebene Bilderzeugungsvorrichtung den jeweils gespeicherten Verarbeitungsinhalt ausführen soll, wenn bestimmt wird, dass die gegebene Bilderzeugungsvorrichtung den jeweils gespeicherten Verarbeitungsinhalt ausführen soll, und den Datenverarbeitungsstatus, der dem jeweils gespeicherten Verarbeitungsinhalt entspricht, mit einem Inhalt schreibt, der darstellt, dass eine andere der Bilderzeugungsvorrichtungen den jeweils gespeicherten Verarbeitungsinhalt ausführen soll, wenn bestimmt wird, dass die gegebene Bilderzeugungsvorrichtung den jeweils gespeicherten Verarbeitungsinhalt nicht ausführen soll, und nach der Durchführung des Schreibens des Datenverarbeitungsstatus aller der geteilten Daten ein Verteilungsverarbeitungsbefehlssignal an jede andere der Mehrzahl von Bilderzeugungsvorrichtungen sendet, wobei das Verteilungsverarbeitungsbefehlssignal dazu dient, eine Bilderzeugungsvorrichtung, die ihn empfängt, zum Bezugnehmen auf die Informationen zu befähigen, die im Speicherabschnitt der gegebenen Bilderzeugungsvorrichtung gespeichert sind;
der Verarbeitungsverteilungsverwaltungsabschnitt (2a, 2b, 2c, 2d) der gegebenen Bilderzeugungsvorrichtung ferner so konfiguriert ist, dass er nach dem Senden des Verteilungsverarbeitungsbefehlssignals an die gegebene Bilderzeugungsvorrichtung für alle geteilten Daten, die im Speicherabschnitt jeder anderen der Mehrzahl von Bilderzeugungsvorrichtungen gespeichert sind und für die der Datenverarbeitungsstatus darstellt, dass eine andere Bilderzeugungsvorrichtung als die, welche die geteilten Daten speichert, den jeweils gespeicherten Verarbeitungsinhalt ausführen soll, basierend auf dem Datenverarbeitungszustand, der vom Zustandsverwaltungsabschnitt der gegebenen Bilderzeugungsvorrichtung spezifiziert wird, bestimmt, ob die gegebene Bilderzeugungsvorrichtung den jeweils gespeicherten Inhalt ausführen soll, und den Datenverarbeitungsstatus, der dem jeweils gespeicherten Inhalt entspricht, mit einem Inhalt überschreibt, der darstellt, dass die gegebene Bilderzeugungsvorrichtung den jeweils gespeicherten Verarbeitungsinhalt ausführen soll, wenn bestimmt wird, dass die gegebene Bilderzeugungsvorrichtung den jeweils gespeicherten Verarbeitungsinhalt ausführen soll;
der Ausführungsverarbeitungsabschnitt der gegebenen Bilderzeugungsvorrichtung so konfiguriert ist, dass er in einem Fall, in welchem der Datenverarbeitungsstatus, der einem Verarbeitungsinhalt entspricht, der im Speicherabschnitt einer Bilderzeugungsvorrichtung gespeichert ist, anzeigt, dass die gegebene Bilderzeugungsvorrichtung den Verarbeitungsinhalt ausführen soll, eine Datenverarbeitung, die durch den Verarbeitungsinhalt angezeigt wird, an den geteilten Daten ausführt, die dem Verarbeitungsinhalt entsprechen,
der Verarbeitungsverteilungsverwaltungsabschnitt (2a, 2b, 2c, 2d) der gegebenen Bilderzeugungsvorrichtung ferner so konfiguriert ist, dass er in einem Fall, in welchem der Ausführungsverarbeitungsabschnitt der gegebenen Bilderzeugungsvorrichtung die Datenverarbeitung durchführt, die durch die gegebene Bilderzeugungsvorrichtung ausgeführt werden soll, für alle der geteilten Daten, die im Speicherabschnitt der gegebenen Bilderzeugungsvorrichtung gespeichert sind, bestimmt, ob es geteilte Daten gibt, für welche der entsprechende Datenverarbeitungsstatus "unverarbeitet" ist, oder nicht, und für alle der bestimmten geteilten Daten, für welche der entsprechende Datenverarbeitungsstatus "unverarbeitet" ist, basierend auf dem Datenverarbeitungszustand, der vom Zustandsverwaltungsabschnitt der gegebenen Bilderzeugungsvorrichtung spezifiziert wird, bestimmt, ob die gegebene Bilderzeugungsvorrichtung den jeweils gespeicherten Verarbeitungsinhalt ausführen soll,
der Verarbeitungsverteilungsverwaltungsabschnitt (2a, 2b, 2c, 2d) der gegebenen Bilderzeugungsvorrichtung ferner so konfiguriert ist, dass er für alle der bestimmten geteilten Daten, für welche der entsprechende Datenverarbeitungsstatus "unverarbeitet" ist, den Datenverarbeitungsstatus, der dem jeweils gespeicherten Verarbeitungsinhalt entspricht, mit meinem Inhalt überschreibt, der darstellt, dass die gegebene Bilderzeugungsvorrichtung den jeweils gespeicherten Verarbeitungsinhalt ausführen soll, wenn bestimmt wird, dass die gegebene Bilderzeugungsvorrichtung den jeweils gespeicherten Verarbeitungsinhalt ausführen soll, und das Verteilungsverarbeitungsbefehlssignal an jede andere der Mehrzahl von Bilderzeugungsvorrichtungen sendet, wenn bestimmt wird, dass die gegebene Bilderzeugungsvorrichtung den jeweils gespeicherten Verarbeitungsinhalt nicht ausführen soll.

2. Bilderzeugungssystem nach Anspruch 1, wobei
der Verarbeitungsverteilungsverwaltungsabschnitt ferner so konfiguriert ist, dass er in einem Fall, in welchem bestimmt wird, dass es keine Daten gibt, die "unverarbeitet" anzeigen, bestimmt, ob es Daten gibt, die anzeigen, dass der Datenverarbeitungsstatus "in Bearbeitung" einer anderen Bilderzeugungsvorrichtung ist, oder nicht.

3. Bilderzeugungssystem nach Anspruch 1 oder 2, wobei
die Endgerätevorrichtung einen Sendeabschnitt zum Senden der geteilten Spool-Daten und der Informationen an eine der Mehrzahl von Bilderzeugungsvorrichtungen umfasst; und
jede der Mehrzahl von Bilderzeugungsvorrichtungen einen Kommunikationsabschnitt (10a, 10b, 10c, 10d) umfasst, der so konfiguriert ist, dass er die geteilten Spool-Daten und die Informationen von der Endgerätevorrichtung empfängt und Senden/Empfangen von Daten mit jeder der Mehrzahl von Bilderzeugungsvorrichtungen ausführt.

## Revendications

1. Système de formation d'images (50) comprenant un appareil terminal (200) et une pluralité d'appareils de formation d'images (100a, 100b, 100c, 100d), chaque appareil de la pluralité d'appareils de formation d'images (100a) comprenant :
une section de stockage (20a, 20b, 20c, 20d) configurée de manière à stocker des données d'impression différée divisées et, pour chacune des données divisées, des informations indiquant un contenu de traitement ;
une section de gestion d'état (1a, 1b, 1c, 1d) configurée de manière à spécifier un état de traitement de données de dispositif autonome ;
une section de gestion de répartition de traitement (2a, 2b, 2c, 2d) ; et
une section de traitement d'exécution (3a, 3b, 3c, 3d) ;
dans lequel :
la section de gestion de répartition de traitement (2a, 2b, 2c, 2d) d'un appareil de formation d'images donné est configurée de manière à déterminer, pour chacune des données divisées stockées dans la section de stockage de l'appareil de formation d'images donné, si l'appareil de formation d'images donné doit exécuter le contenu de traitement respectivement stocké, sur la base de l'état de traitement de données spécifié par la section de gestion d'état de l'appareil de formation d'images donné ;
le système de formation d'images (50) étant **caractérisé en ce que** :
la section de gestion de répartition de traitement (2a, 2b, 2c, 2d) de l'appareil de formation d'images donné est en outre configurée, pour chacune des données divisées stockées dans la section de stockage de l'appareil de formation d'images donné, s'il est déterminé que l'appareil de formation d'images donné doit exécuter le contenu de traitement respectivement stocké, de manière à écrire, dans les informations stockées dans la section de stockage de l'appareil de formation d'images donné, un statut de traitement de données correspondant au contenu de traitement respectivement stocké, avec un contenu représentant le fait que l'appareil de formation d'images donné doit exécuter le contenu de traitement respectivement stocké, et s'il est déterminé que l'appareil de formation d'images donné ne doit pas exécuter le contenu de traitement respectivement stocké, à écrire le statut de traitement de données correspondant au contenu de traitement respectivement stocké avec un contenu représentant le fait qu'un appareil différent parmi les appareils de formation d'images doit exécuter le contenu de traitement respectivement stocké et, après l'achèvement de l'écriture du statut de traitement de données de chacune des données divisées, à envoyer un signal d'instruction de traitement de répartition à chaque autre appareil de la pluralité d'appareils de formation d'images, le signal d'instruction de traitement de répartition étant destiné à permettre à un appareil de formation d'images qui le reçoit de se référer aux informations stockées dans la section de stockage de l'appareil de formation d'images donné ;
la section de gestion de répartition de traitement (2a, 2b, 2c, 2d) de l'appareil de formation d'images donné est en outre configurée de manière à déterminer, pour chacune des données divisées stockées dans la section de stockage de tout autre appareil parmi la pluralité d'appareils de formation d'images ayant envoyé le signal d'instruction de traitement de répartition à l'appareil de formation d'images donné, et pour lesquelles le statut de traitement de données représente le fait qu'un appareil de formation d'images différent de celui stockant les données divisées doit exécuter le contenu de traitement respectivement stocké, si l'appareil de formation d'images donné doit exécuter le contenu de traitement respectivement stocké, sur la base de l'état de traitement de données spécifié par la section de gestion d'état de l'appareil de formation d'images donné, et à réécrire le statut de traitement de données correspondant au contenu de traitement respectivement stocké, avec un contenu représentant le fait que l'appareil de formation d'images donné doit exécuter le contenu de traitement respectivement stocké s'il est déterminé que l'appareil de formation d'images donné doit exécuter le contenu de traitement respectivement stocké ;
la section de traitement d'exécution de l'appareil de formation d'images donné est configurée de manière à exécuter, dans le cas où le statut de traitement de données correspondant à un contenu de traitement stocké dans la section de stockage d'un appareil de formation d'images quelconque indique que l'appareil de formation d'images donné doit exécuter le contenu de traitement, un traitement de données indiqué par le contenu de traitement sur les données divisées correspondant au contenu de traitement ;
la section de gestion de répartition de traitement (2a, 2b, 2c, 2d) de l'appareil de formation d'images donné est en outre configurée de manière à, pour chacune des données divisées stockées dans la section de stockage de l'appareil de formation d'images donné, déterminer s'il existe ou non des données divisées pour lesquelles le statut de traitement de données correspondant est « non traité », dans le cas où la section de traitement d'exécution de l'appareil de formation d'images donné achève le traitement de données qui doit être exécuté par l'appareil de formation d'images donné, et à déterminer, pour chacune des données divisées déterminées pour lesquelles le statut de traitement de données correspondant est « non traité », si l'appareil de formation d'images donné doit exécuter le contenu de traitement respectivement stocké, sur la base de l'état de traitement de données spécifié par la section de gestion d'état de l'appareil de formation d'images donné ; et
la section de gestion de répartition de traitement (2a, 2b, 2c, 2d) de l'appareil de formation d'images donné est en outre configurée de manière à, pour chacune des données divisées déterminées pour lesquelles le statut de traitement de données correspondant est « non traité », s'il est déterminé que l'appareil de formation d'images donné doit exécuter le contenu de traitement respectivement stocké, réécrire le statut de traitement de données correspondant au contenu de traitement respectivement stocké, avec un contenu représentant le fait que l'appareil de formation d'images donné doit exécuter le contenu de traitement respectivement stocké, et s'il est déterminé que l'appareil de formation d'images donné ne doit pas exécuter le contenu de traitement respectivement stocké, à envoyer le signal d'instruction de traitement de répartition à chaque autre appareil parmi la pluralité d'appareils de formation d'images.

2. Système de formation d'images selon la revendication 1, dans lequel :
la section de gestion de répartition de traitement est en outre configurée de manière à déterminer s'il existe ou non des données, indiquant que le statut de traitement de données est « en cours de traitement », d'un autre appareil de formation d'images, dans le cas où il est déterminé qu'il n'existe pas de données indiquant un statut « non traité ».

3. Système de formation d'images selon la revendication 1 ou 2, dans lequel :
l'appareil terminal comprend une section d'envoi destinée à envoyer les données d'impression différée divisées et les informations, à un appareil de la pluralité d'appareils de formation d'images ; et
chaque appareil de la pluralité d'appareils de formation d'images comprend une section de communication (10a, 10b, 10c, 10d) configurée de manière à recevoir les données d'impression différée divisées et les informations, en provenance de l'appareil terminal, et à mettre en œuvre une transmission/réception de données avec chaque appareil de la pluralité d'appareils de formation d'images.
